# EUROPEAN PATENT SPECIFICATION

(11) **EP 3 321 776 B1**
(45) Date of publication and mention of the grant of the patent: **30.09.2020**
(21) Application number: 16821326.2
(22) Date of filing: 01.07.2016
(51) Int. Cl.: G06F 3/01, G06F 3/0481, G06F 3/0487, G06F 3/0484, G02B 27/01

(54) **OPERATION INPUT DEVICE AND OPERATION INPUT METHOD**
OPERATIONSEINGABEVORRICHTUNG UND OPERATIONSEINGABEVERFAHREN
DISPOSITIF D'ENTRÉE D'OPÉRATION ET PROCÉDÉ D'ENTRÉE D'OPÉRATION

(30) Priority: 08.07.2015 JP 2015136711
(43) Date of publication of application: 16.05.2018
(73) Proprietor: Sony Interactive Entertainment Inc., Tokyo 108-0075 (JP)
(72) Inventor: OKUMURA, Yasushi, Tokyo 108-0075 (JP)
(74) Representative: Müller Hoffmann & Partner
(86) International application number: PCT/JP2016/069618
(87) International publication number: WO 2017/006857

(56) References cited:
- JP-A- 2012 123 812
- JP-A- 2013 037 467
- JP-A- 2014 222 495
- JP-A- 2014 235 634
- JP-A- 2015 005 197
- US-A1- 2012 242 560

## Description

### [Technical Field]

The present invention relates to an apparatus and a method for inputting operations in a wearable display.

### [Background Art]

A system being developed displays a panoramic video in a head mounted display. In the system, when the user wearing the head mounted display turns the head, a panoramic image corresponding to the direction of the sight is displayed. By using the head mounted display, it is possible to increase the feel of immersion in the video and improve the operability of an application such as a game. Moreover, a walkthrough system is also being developed. In the walkthrough system, the user wearing the head mounted display can virtually walk around a space displayed as a video by physically moving. US 2012/0242560 A1 discloses a head-mounted display device that includes: an image display unit including an image-light generating unit that generates image light representing an image and emits the image light and a light guide unit that guides the emitted image light to the eye of a user, the image display unit being for causing the user to visually recognize a virtual image; and a control unit that includes an operation surface, is connected to the image display unit, and controls image display by the image display unit. When it is assumed that the user shifts the user's attention from the virtual image, the control unit adjusts the luminance of the image-light generating unit or adjusts the image light generated by the image-light generating unit to reduce the visibility of the virtual image.

JP 2012/123812 A discloses a head-mounted display device. The velocity of the user's head is tracked and displayed on an indicator on the display. If the velocity meets the condition of one or more thresholds, a respectively corresponding operation is executed.

JP 2013/037467 A discloses a command-issuing apparatus that issues a command according to a motion of a specific region (e.g., a hand) of a user. The apparatus issues a predetermined command if the moving speed of the specific region exceeds a reference speed (fast motion).

### [Technical Problem]

The user wearing a wearable display such as the head mounted display encounters difficulties inputting operations to the system using an input device such as a controller or a keyboard. Inputting the operations through gestures is one method, but the user may feel stress since the user does not know how much to move for the gestures.

The present invention has been made in view of the problem, and it is an object of the present invention to provide an operation input apparatus and an operation input method that enable operations to be inputted easily in a wearable display.

### [Solution to Problem]

The invention is defined by the appended claims. References to embodiments which do not fall under the scope of the claims are to be understood as examples useful for understanding the invention.

In order to solve the above problem, an operation input apparatus according to a mode of the present disclosure includes a posture acquisition unit that acquires information on a posture of a user wearing a wearable display apparatus, an operation input unit that accepts an operation input through a gesture by the user, and an indicator display unit that causes the wearable display apparatus to display an indicator indicating an amount of change in the posture of the user at the time the gesture is made. The operation input unit accepts the operation input through the gesture when the amount of change in the posture exceeds a predetermined threshold value.

Another mode of the present disclosure is an operation input method. This method includes a posture acquisition step of acquiring information on a posture of a user wearing a wearable display apparatus, an operation input step of accepting an operation input through a gesture by the user, and an indicator display step of causing the wearable display apparatus to display an indicator indicating an amount of change in the posture of the user at the time the gesture is made. The operation input step accepts the operation input through the gesture when the amount of change in the posture exceeds a predetermined threshold value.

It should be noted that any combinations of the above components and any conversions of expressions of the present invention among methods, apparatuses, systems, computer programs, data structure, recording media, and the like are also effective as modes of the present disclosure.

### [Advantageous Effect of Invention]

According to the present invention, operations can be inputted easily in a wearable display.

### [Brief Description of Drawings]

[FIG. 1]

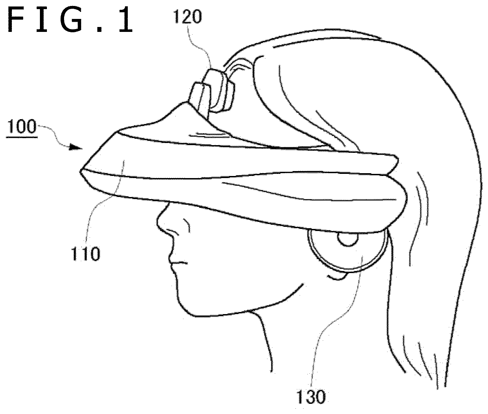

   FIG. 1 is an external view of a head mounted display.
[FIG. 2]

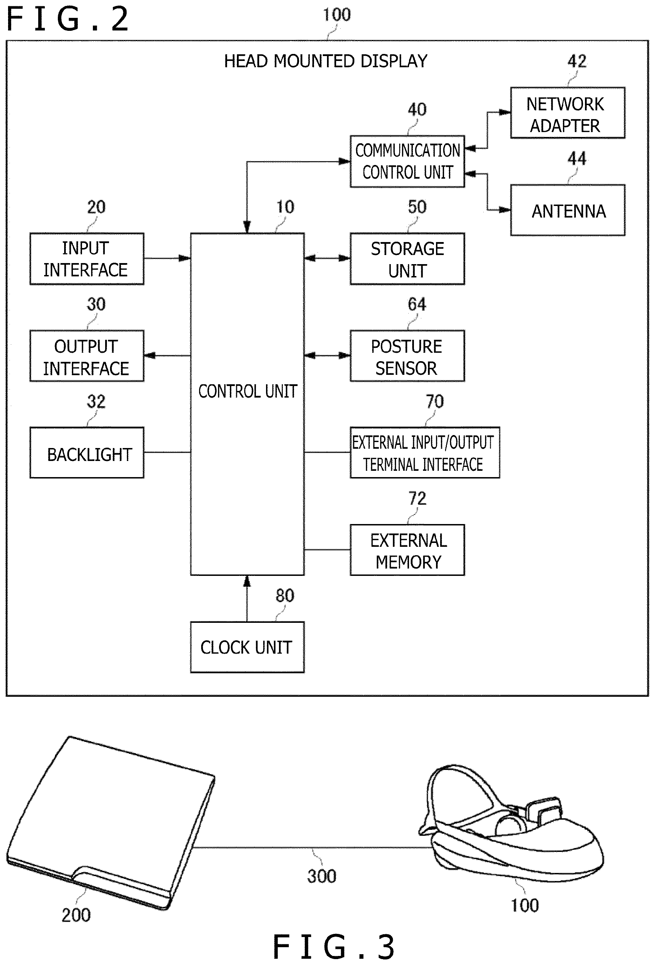

   FIG. 2 is a functional configuration diagram of the head mounted display.
[FIG. 3]
   FIG. 3 is a configuration view of a panoramic image generation system according to a present embodiment.
[FIG. 4]

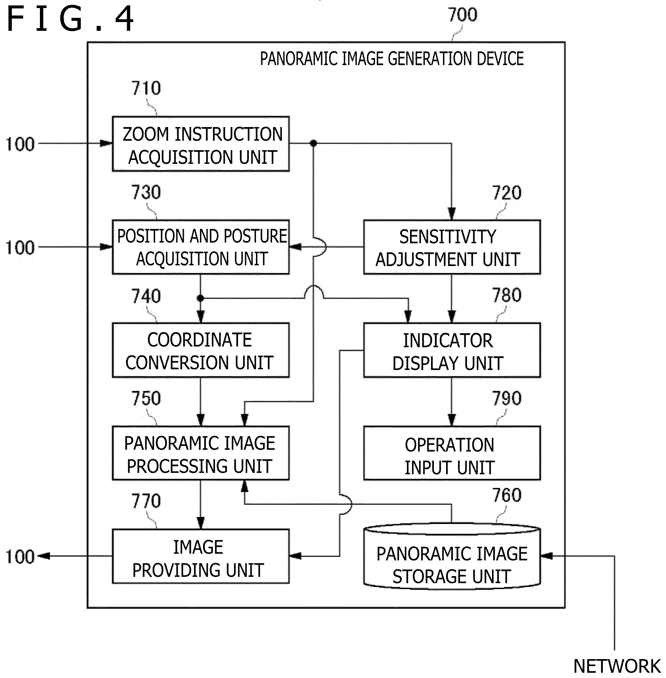

   FIG. 4 is a functional configuration diagram of a panoramic image generation device according to the present embodiment.
[FIG. 5]

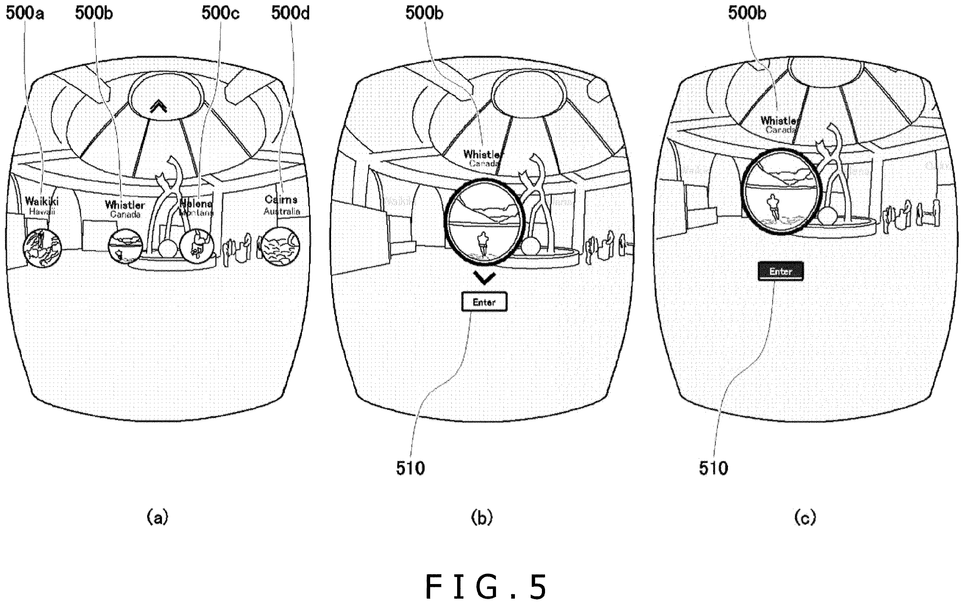

   FIGS. 5(a) to 5(c) are views for describing a panoramic image and content list displayed in the head mounted display.
[FIG. 6]

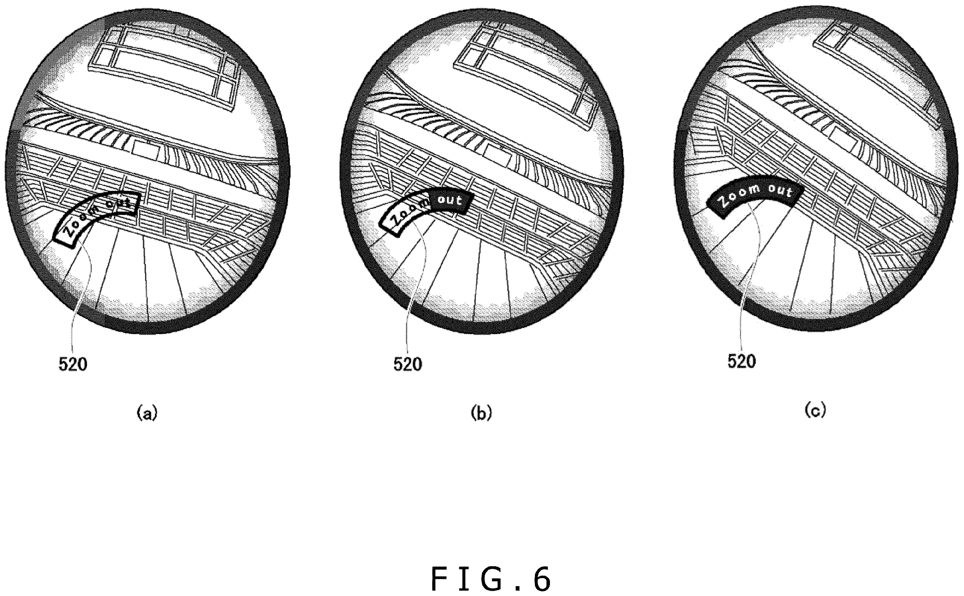

   FIGS. 6(a) to 6(c) are views for describing a change in a scale of an indicator displayed in the head mounted display.
[FIG. 7]

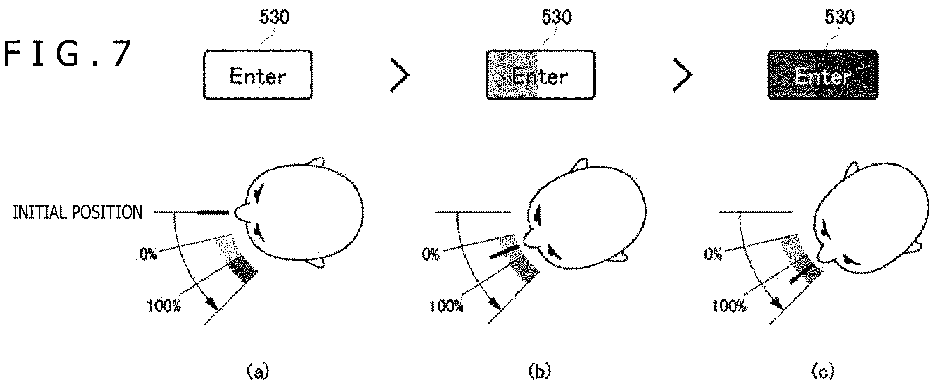

   FIGS. 7(a) to 7(c) are views for describing a relationship between the amount of change in a posture and a scale of an indicator for a gesture of swinging the head horizontally.
[FIG. 8]

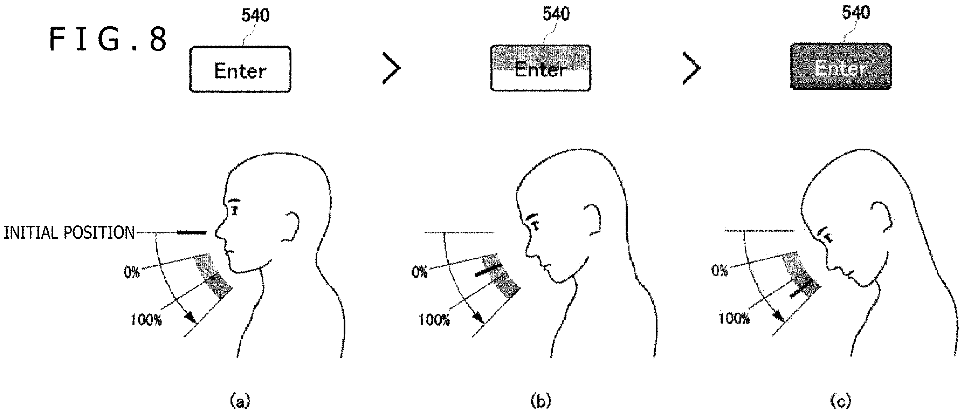

   FIGS. 8(a) to 8(c) are views for describing a relationship between the amount of change in a posture and a scale of an indicator for a gesture of swinging the head vertically (nodding).
[FIG. 9]

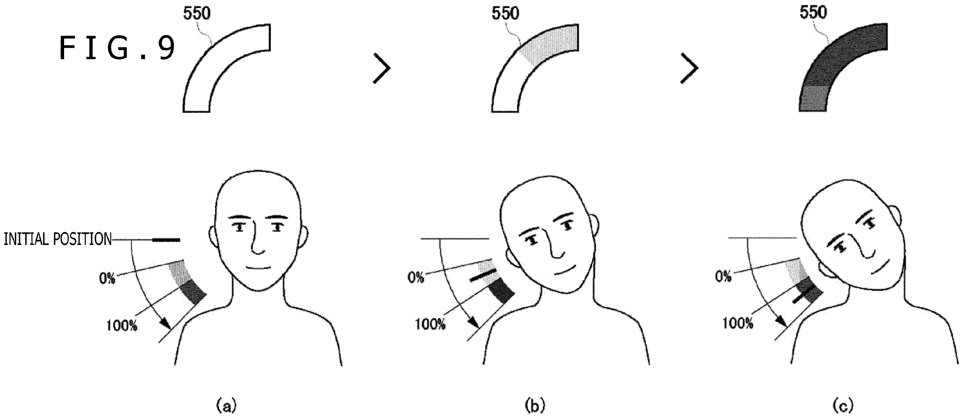

   FIGS. 9(a) to 9(c) are views for describing a relationship between the amount of change in a posture and a scale of an indicator for a gesture of tilting the head.
[FIG. 10]

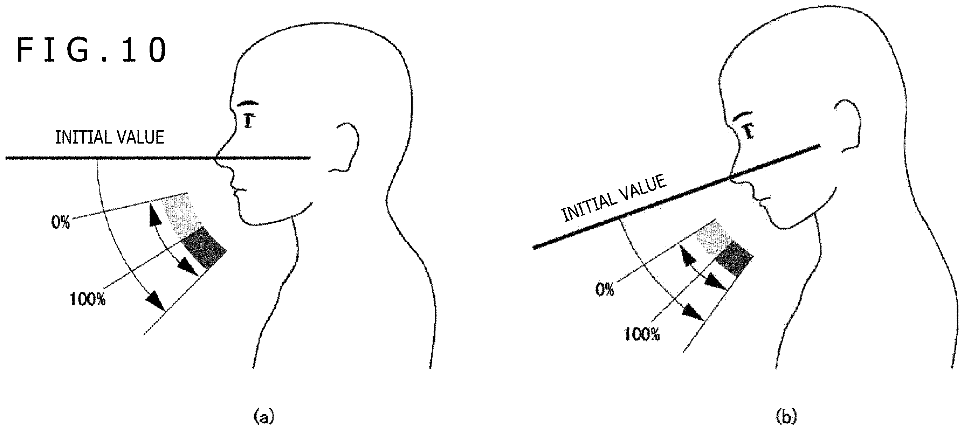

   FIGS. 10(a) and 10(b) are views for describing a relationship between an initial position of a posture and an operation threshold value for a nodding gesture.
[FIG. 11]

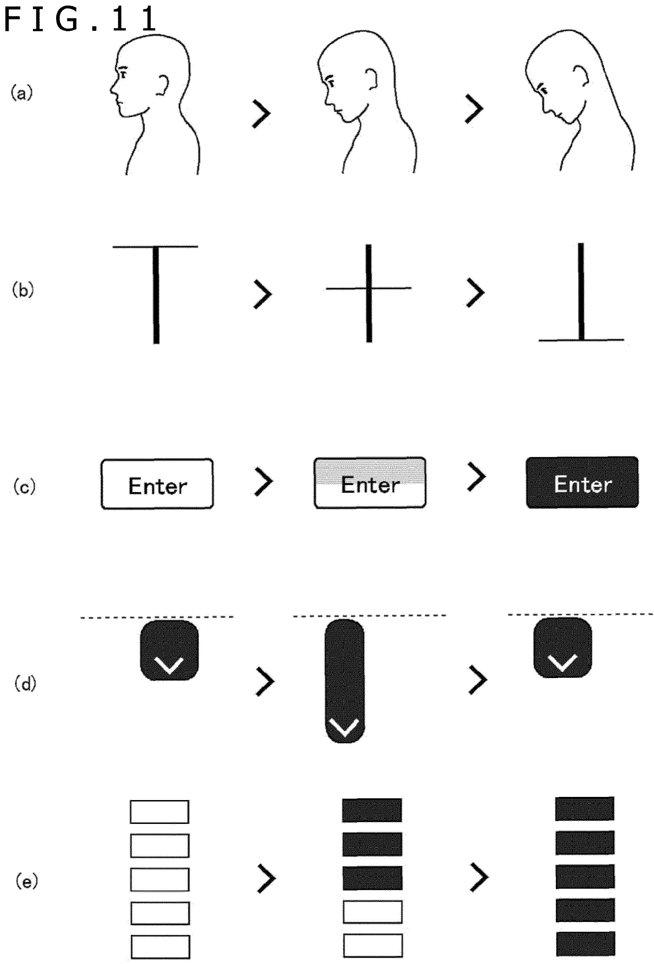

   FIGS. 11(a) to 11(e) are views for describing a correspondence relationship between the gesture of swinging the head vertically and the shapes of indicators.
[FIG. 12]

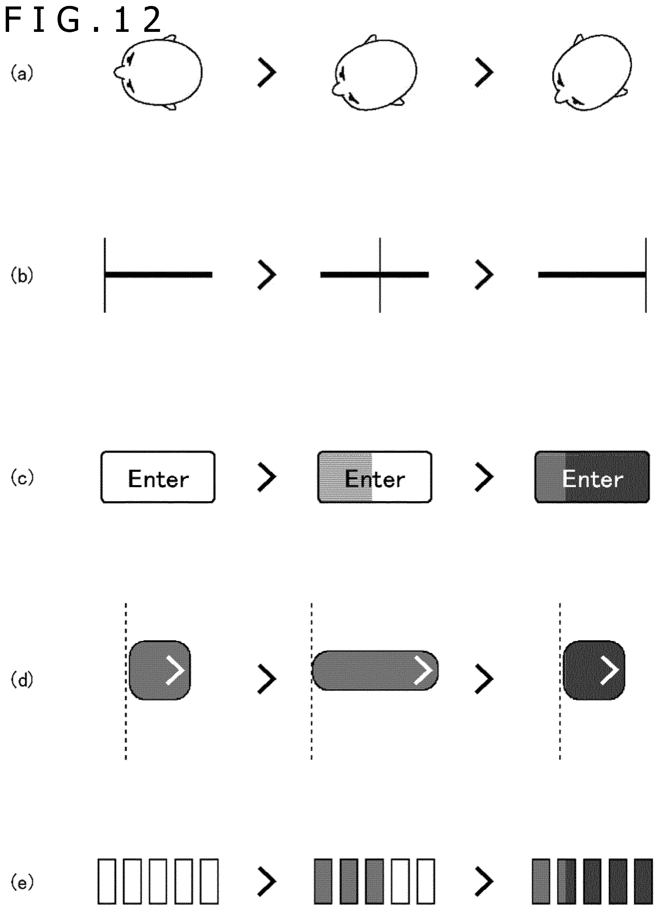

   FIGS. 12(a) to 12(e) are views for describing a correspondence relationship between the gesture of swinging the head horizontally and the shapes of indicators.
[FIG. 13]

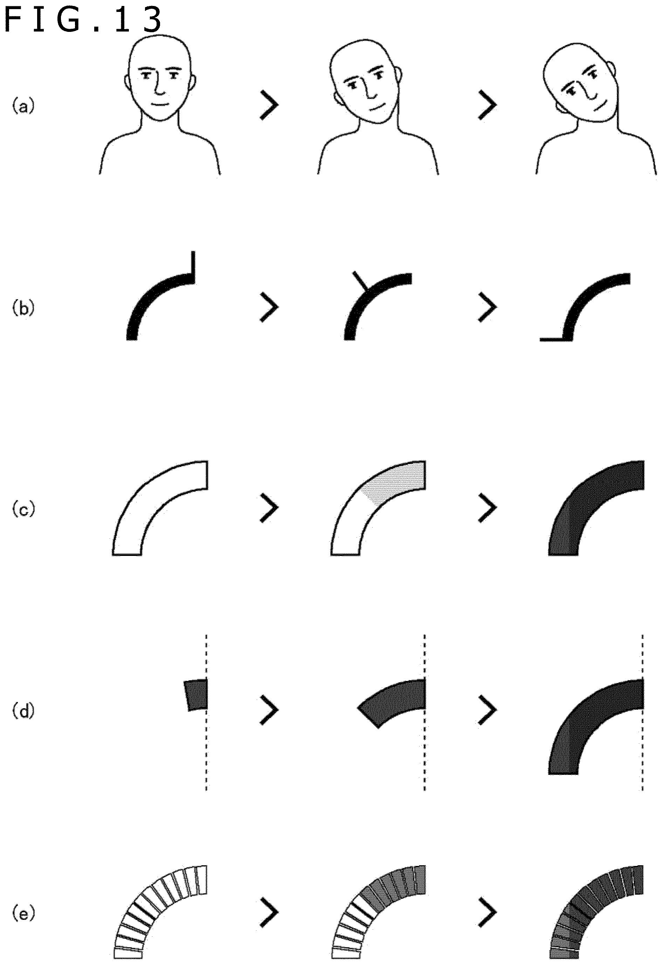

   FIGS. 13(a) to 13(e) are views for describing a correspondence relationship between the gesture of tilting the head and the shapes of indicators.

### [Description of the Embodiments]

FIG. 1 is an external view of a head mounted display 100. The head mounted display 100 includes a main body section 110, a frontal region contacting section 120, and a temporal region contacting section 130.

The head mounted display 100 is a display apparatus, worn on the head of the user, for watching still images, moving images, and the like displayed in a display and listening to sound, music, and the like outputted from a headphone.

A posture sensor built in or externally mounted on the head mounted display 100 can measure posture information such as a rotation angle and tilt of the head of the user wearing the head mounted display 100.

The head mounted display 100 is an example of a "wearable display apparatus." The wearable display apparatus is not limited to the head mounted display 100 in a narrow sense, but includes any wearable display apparatus such as eyeglasses, an eyeglass-type display, an eyeglass-type camera, a headphone, a headset (a headphone with a microphone), an earphone, an earring, an ear-hook camera, a hat, a hat with a camera, or a headband.

FIG. 2 is a functional configuration diagram of the head mounted display 100.

A control unit 10 is a main processor that processes and outputs signals such as image signals and sensor signals, instructions, and data. An input interface 20 receives operation signals and setting signals from the user, and supplies the signals to the control unit 10. An output interface 30 receives the image signals from the control unit 10 and causes the display to display the image signals. A backlight 32 supplies backlight to the liquid crystal display.

A communication control unit 40 transmits data inputted from the control unit 10 to the outside via a network adapter 42 or an antenna 44 through wired or wireless communication. In addition, the communication control unit 40 receives data from the outside via the network adapter 42 or the antenna 44 through wired or wireless communication, and outputs the data to the control unit 10.

A storage unit 50 temporarily stores the data, parameters, operation signals, and the like to be processed by the control unit 10.

A posture sensor 64 detects posture information such as a rotation angle and tilt of the main body section 110 of the head mounted display 100. The posture sensor 64 is implemented by a combination of a gyro sensor, an acceleration sensor, an angular acceleration sensor, and the like, as appropriate.

An external input/output terminal interface 70 is an interface for connecting peripheral equipment such as a universal serial bus (USB) controller. An external memory 72 is an external memory such as a flash memory.

A clock unit 80 sets time information according to the setting signals received from the control unit 10 and supplies time data to the control unit 10.

The control unit 10 can supply images and text data to the output interface 30 so as to display the images and text data in the display, or to the communication control unit 40 so as to transmit the images and text data to the outside.

FIG. 3 is a configuration view of a panoramic image generation system according to the present embodiment. The head mounted display 100 is connected to a game machine 200 through an interface 300 for wireless communication or for the connection of the peripheral equipment such as a USB. The game machine 200 may further be connected to a server via a network. In this case, the server may provide the game machine 200 with an online application such as a game in which a plurality of users can participate via the network. The head mounted display 100 may be connected to a computer or a mobile terminal, instead of the game machine 200.

A panoramic image to be displayed in the head mounted display 100 may be a 360-degree panoramic still image or panoramic moving image captured in advance or may be an artificial panoramic image such as a game space. Further, the panoramic image may be a live video of a remote location distributed via the network.

FIG. 4 is a functional configuration diagram of a panoramic image generation device 700 according to the present embodiment. This figure depicts a block diagram focusing on the functions. These functional blocks can be implemented in a variety of manners by hardware only, software only, or a combination thereof.

The panoramic image generation device 700 is mounted in the game machine 200 to which the head mounted display 100 is connected. However, at least part of the functions of the panoramic image generation device 700 may be mounted in the control unit 10 of the head mounted display 100. Alternatively, at least part of the functions of the panoramic image generation device 700 may be mounted in the server connected to the game machine 200 via the network.

A zoom instruction acquisition unit 710 acquires a zoom magnification instructed by the user via the input interface 20 of the head mounted display 100. The zoom magnification acquired by the zoom instruction acquisition unit 710 is supplied to a sensitivity adjustment unit 720 and a panoramic image processing unit 750.

A position and posture acquisition unit 730 acquires the position and posture of the head of the user wearing the head mounted display 100 on the basis of the position information detected by a motion sensor of the head mounted display 100 and the posture information detected by the posture sensor 64. A camera of the game machine 200 may detect the movement of the head mounted display 100 to acquire the position of the head of the user.

The position and posture acquisition unit 730 acquires the position and posture of the head of the user on the basis of the sensitivity instructed from the sensitivity adjustment unit 720. For example, when the user turns the head, the posture sensor 64 detects the change in the angle of the head of the user. However, the sensitivity adjustment unit 720 instructs the position and posture acquisition unit 730 to ignore the detected change in the angle until the change in the angle exceeds a predetermined value.

In addition, the sensitivity adjustment unit 720 adjusts the sensitivity of the detection of the angle of the head on the basis of the zoom magnification acquired from the zoom instruction acquisition unit 710. As the zoom magnification increases, the sensitivity of the detection of the angle of the head is lowered. Since zooming narrows the angle of view, lowering the sensitivity of the detection of the angle of the head can reduce the vibration of a display image when the head is swung.

A combination of at least one of a three-axis geomagnetic sensor, a three-axis acceleration sensor, and a three-axis gyro (angular velocity) sensor may be used as the motion sensor to detect forward and backward, leftward and rightward, and upward and downward movements of the head of the user. Further, the precision of the movement detection of the head may be improved by combining the information on the position of the head of the user.

On the basis of the posture of the head mounted display 100 acquired by the position and posture acquisition unit 730, a coordinate conversion unit 740 performs coordinate conversion to generate an image to be displayed in the head mounted display 100.

The panoramic image processing unit 750 reads panoramic image data from a panoramic image storage unit 760, and generates a panoramic image corresponding to the position and posture of the head mounted display 100 with the zoom magnification specified by the zoom instruction acquisition unit 710, on the basis of the coordinate conversion performed by the coordinate conversion unit 740. Then, the panoramic image processing unit 750 supplies the panoramic image to an image providing unit 770. Here, the panoramic image data may be moving image or still image content created in advance, or may be computer graphics obtained by rendering. Further, a panoramic image captured at a remote location may be received via the network and stored in the panoramic image storage unit 760.

The panoramic image storage unit 760 stores a plurality of types of panoramic images. The panoramic images are examples of images of surrounding spaces centered around respective fixed points. For a panoramic image of a whole celestial sphere, the surrounding space (panoramic space) is represented by a sphere.

In the present embodiment, the coordinates of the center of a panoramic sphere and the radius thereof are determined in the world coordinate system. In the world coordinate system, a plurality of panoramic spheres is arranged with their directions aligned among the panoramic spheres. The user wearing the head mounted display 100 can virtually walk through a panoramic space in the world coordinate system by physically moving while viewing an image of the corresponding panoramic sphere in the display. In the world coordinate system, the user can stay in one panoramic sphere or move from one panoramic sphere to another panoramic sphere.

An operation input unit 790 accepts an operation input through a predetermined gesture by the user. Examples of the operation include selection and execution of content included in a content list, zooming in and zooming out of a panoramic image, and the like. The operation input unit 790 accepts the operation input through the gesture when the amount of change in the posture of the user at the time the gesture is made exceeds a predetermined threshold value. This threshold value will be referred to as an "operation threshold value." The operation input through the gesture by the user is not accepted unless the amount of change in the posture exceeds the operation threshold value, and only after the amount of change in the posture exceeds the operation threshold value, the operation is executed.

The operation input accepted by the operation input unit 790 is transmitted to a control unit that is not illustrated, and the operation corresponding to the operation input is executed.

The operation threshold value may be adjusted according to the initial position of the posture at the time the user gestures. For example, when a nodding gesture is made, the operation threshold value is made into a different value according to the tilt of the head. In cases where the head is facing diagonally downward from the beginning, it is difficult to tilt the head any further compared to the cases where the face is facing the front. Therefore, the operation threshold value is set low.

Further, the operation threshold value may be adjusted for each user. When there are a user who wants to greatly change the posture (or can change the posture easily) and a user who does not want to change the posture very much (or has difficulty to change the posture), the users can customize the operation threshold value themselves. Further, the ease of the change of the posture and the range of motion are different depending on whether the user is upright, sitting, or lying down. Therefore, the operation threshold value may be adjusted according to the attitude of the user.

An indicator display unit 780 generates an image of an indicator on the basis of the information on the posture of the user acquired by the position and posture acquisition unit 730 and the information on the sensitivity of the posture detection acquired by the sensitivity adjustment unit 720, and supplies the image of the indicator to the image providing unit 770. The indicator indicates the amount of change in the posture at the time the gesture is made. The amount of change in the posture is indicated by a scale of the indicator, for example.

The indicator display unit 780 may display the operation threshold value in the indicator. For example, a value corresponding to the threshold value in the scale of the indicator can be displayed with some mark as the operation threshold value. Alternatively, the maximum scale of the indicator may serve as the operation threshold value as it is. The operation threshold value serves as a "backlash" until the operation is inputted. Therefore, even when the indicator is displayed by a gesture, the operation is not inputted unless the scale of the indicator progresses and exceeds the operation threshold value. As such, the user can look at the indicator to determine whether to input the operation by changing the posture until the scale exceeds the operation threshold value or to cancel the operation without changing the posture any further.

The indicator display unit 780 may adjust the sensitivity for displaying the amount of change in the posture in the indicator according to the initial position of the posture at the time the user gestures. For example, when a nodding gesture is made, the sensitivity for displaying the amount of change in the indicator is changed according to the tilt of the head. In cases where the head is facing downward from the beginning, it is difficult to tilt the head any further compared to the cases where the face is facing the front. Therefore, the sensitivity for displaying the amount of change in the posture in the indicator is set high. With this configuration, even when the head is slightly tilted, the amount of change appears to be large in the indicator. In other words, the progress of the scale of the indicator can be made faster.

The image providing unit 770 supplies the panoramic image data generated by the panoramic image processing unit 750 and indicator image data generated by the indicator display unit 780 to the head mounted display 100.

The user wearing the head mounted display 100 can view the panoramic image corresponding to the position and posture of the user while looking at the indicator displayed on the screen when the user makes a specific gesture. When the user wants to execute an operation corresponding to the specific gesture, the user can input the operation by changing the posture until the amount of change in the posture of the user displayed in the indicator exceeds the operation threshold value.

An "operation input apparatus" at least includes the position and posture acquisition unit 730, the indicator display unit 780, and the operation input unit 790. A part or the whole of this configuration may be provided in the head mounted display 100. Hereinafter, the operation of the operation input apparatus according to the present embodiment will be described.

FIGS. 5(a) to 5(c) are views for describing a panoramic image and content list displayed in the head mounted display 100.

As illustrated in FIG. 5(a), the content list is displayed in the center of the panoramic image. In the content list, thumbnail images 500a to 500d of panoramic spheres are arranged in the horizontal direction. The thumbnail images of the panoramic spheres are arranged in the surrounding 360 degrees around the position of the user in the virtual space, and the user can view the thumbnail images of the panoramic spheres in the content list by turning the head in the horizontal direction.

As illustrated in FIG. 5(b), when the user turns the head such that the thumbnail image 500b of the panoramic sphere comes to the front, the front thumbnail image 500b is highlighted and an indicator 510 is displayed under the thumbnail image 500b. Here, the highlight involves, for example, enlarging the thumbnail image or displaying a frame around the thumbnail image. Alternatively, the configuration may be such that when a predetermined period of time elapses after the thumbnail image 500b comes to the front and the turn of the head is stopped (referred to as "idling"), the thumbnail image 500b is highlighted and the indicator 510 is displayed.

When the user makes a gesture of, for example, swinging the head horizontally while the indicator 510 is displayed, the scale of the indicator 510 progresses in the indicator 510 in proportion to the amount of change in the posture as illustrated in FIG. 5(c). Here, the indicator 510 has the shape of an operation button, and the background color of the operation button is painted from above in proportion to the angle of the head being swung horizontally. It should be noted that the entire panoramic image the user is viewing also moves horizontally as the head is swung horizontally.

When the head is swung horizontally until the predetermined operation threshold value is exceeded, the inside of the indicator 510 is painted completely. Then, the input of the specified operation is accepted and the execution thereof is started. The operation executed herein is switching the panoramic image to the panoramic sphere corresponding to the selected thumbnail image 500b. Upon switching to a panoramic image of another panoramic sphere, effects such as fade-out, fade-in, and the like may be applied, instead of suddenly switching.

FIGS. 6(a) to 6(c) are views for describing the change in a scale of an indicator 520 displayed in the head mounted display 100.

The indicator 520 has an arc shape and is displayed when the user tilts the head. The gesture of tilting the head corresponds to zooming in or zooming out of a panoramic image. For example, the gesture of tilting the head to the right corresponds to zooming in, while the gesture of tilting the head to the left corresponds to zooming out.

As illustrated in FIG. 6(a), when the user makes a gesture of slightly tilting the head to the left first, the indicator 520 for zooming out is displayed. As the user tilts the head further to the left, the scale of the indicator 520 progresses as illustrated in FIG. 6(b). Here, the background color inside the indicator 520 is being painted. When the operation threshold value is exceeded by tilting the head deeper, further to the left, the scale of the indicator 520 moves to the end as illustrated in FIG. 6(c). Then, the input of the operation of zooming out is accepted and the panoramic image is zoomed out. It should also be noted here that the panoramic image the user is viewing also turns in proportion to the change in the posture through the movement of tilting the head.

FIGS. 7(a) to 7(c) are views for describing a relationship between the amount of change in a posture and a scale of an indicator for a gesture of swinging the head horizontally. As illustrated in FIG. 7(a), the initial position is the posture where the face is facing the front. By continuing this posture for a certain period of time (idling), an indicator 530 is displayed in the panoramic image. Here, the indicator 530 has the shape of an operation button, and the background color is transparent.

As illustrated in FIG. 7(b), when the head is swung horizontally and the direction of the face exceeds the angle indicated as "0%," the background color of the indicator 530 is painted from the left. The direction in which the background color is painted is the same horizontal direction as the direction in which the head is swung.

As illustrated in FIG. 7(c), when the head further continues to be swung horizontally and the direction of the face exceeds the angle indicated as "100%," the background color of the indicator 530 is painted completely. Then, the input of the operation is accepted and the execution thereof is started.

FIGS. 8(a) to 8(c) are views for describing a relationship between the amount of change in a posture and a scale of an indicator for a gesture of swinging the head vertically (nodding). As illustrated in FIG. 8(a), when the posture in the initial position where the face is facing the front is continued for a certain period of time, an indicator 540 having the shape of an operation button is displayed in the panoramic image. At this point, the background color of the indicator 540 is transparent.

As illustrated in FIG. 8(b), when the head is swung vertically and the tilt of the face exceeds the angle at "0%," the background color of the indicator 540 is painted from above. The direction in which the background color is painted is the same vertical direction as the direction in which the head is swung.

As illustrated in FIG. 8(c), when the head further continues to be swung vertically and the tilt of the face exceeds the angle at "100%," the background color of the indicator 540 is painted completely. Then, the input of the operation is accepted and the execution thereof is started.

FIGS. 9(a) to 9(c) are views for describing a relationship between the amount of change in a posture and a scale of an indicator for a gesture of tilting the head. As illustrated in FIG. 9(a), when the head is slightly tilted from the posture in the initial position where the head is in an upright position, an indicator 550 having an arc shape is displayed in the panoramic image. An indicator having a left arc shape is displayed when the head is tilted to the left, while an indicator having a right arc shape is displayed when the head is tilted to the right. At this point, the background color of the indicator 550 is transparent.

As illustrated in FIG. 9(b), when the head is tilted further and the turn of the face exceeds the angle at "0%," the background color of the indicator 550 is painted.

As illustrated in FIG. 9(c), when the head is continued to be tilted further and the turn of the face exceeds the angle at "100%," the background color of the indicator 550 is painted completely. Then, the input of the operation is accepted and the execution thereof is started.

There are various gestures other than above, such as thrusting the face forward, quickly swinging the head several times horizontally, and raising the face upward. By associating each of the gestures with a specific operation, an appropriate indicator for the corresponding gesture can be displayed.

For example, when a thumbnail image of specific content in a content list is selected and executed, a panoramic image is displayed after shifting to a panoramic sphere of the specific content. At this point, quickly swinging the head horizontally returns to a panoramic sphere of original content and displays an original panoramic image. At this time, the number and speed of swinging the head horizontally may be made different according to the attitude of the user. For example, while the user is lying down, moving the head is not easy. Therefore, even when the number of swinging the head is reduced or the speed of swinging the head is decreased compared to while the user is upright, it is still possible to input the operation. Further, while the user is lying down, the operation threshold value may be set low, compared to while the user is upright.

Further, when a thumbnail image of content in the content list is located above the head of the user, the user needs to move the face upward in order to select the content. However, it is not easy to swing the head horizontally in this state. In such a posture where swinging the head horizontally is not easy, the scale of the indicator may progress without swinging the head after the time elapses in the idling state where the head does not move. Then, after a certain period of time elapses, the selection operation may be automatically inputted and the content may be selected. For example, in the case of content associated with geographical position information, a thumbnail image of the content may be arranged in a direction indicated by the position information in the virtual space. In this case, the thumbnail image of the content is not necessarily arranged at a posture position to which the user can turn the face easily. As described above, with the configuration where the operation is inputted after a certain period of time elapses with the face facing the direction of the thumbnail image of the content, the user is not forced to change the posture unnaturally.

FIGS. 10(a) and 10(b) are views for describing a relationship between the initial position of a posture and the operation threshold value for a nodding gesture.

As illustrated in FIG. 10(a), when the face of the user wearing the head mounted display 100 is facing the front, the range of motion of the nodding gesture is wide. Therefore, the operation threshold value can be set high. On the other hand, when the face is facing diagonally downward from the beginning as illustrated in FIG. 10(b), the range of motion of the nodding gesture is narrow. Therefore, the operation threshold value can be set low. Besides this gesture, in the case of the gesture of swinging the head horizontally, the range of motion of swinging the head horizontally is narrow when the face is already facing diagonally in the horizontal direction. Therefore, the operation threshold value is set low.

In this manner, the operation threshold value is adjusted according to the initial position of the posture of the user when the operation is inputted. The operation threshold value in the indicator may be represented by the length of the indicator itself, and when the operation threshold value is low, the length of the indicator itself is shortened. Alternatively, a value in the middle of the scale of the indicator may be used as the operation threshold value, and the scale serving as the operation threshold value may be highlighted by a mark or color to make the operation threshold value recognizable.

In some cases, moreover, the range of motion of a gesture varies depending on whether the user is standing, sitting, or lying down. Therefore, the operation threshold value may be made into a different value according to the attitude of the user's body. For example, while the user is lying down, moving the head horizontally is difficult, compared to while the user is standing or sitting. While the user is lying down, the operation threshold value may be lowered, or the progress of the scale of the indicator may be increased with respect to the amount of change in the posture. Further, while the user is lying down, the scale of the indicator may progress, not by swinging the head, but with the lapse of time while the user holds the position in the state where the indicator is displayed. Then, after a certain period of time elapses, the operation may be inputted automatically.

FIGS. 11(a) to 11(e) are views for describing a correspondence relationship between the gesture of swinging the head vertically and the shapes of indicators. FIGS. 11(b) to 11(e) illustrate the shapes of a plurality of types of indicators and the display modes of the amount of change in the posture when the gesture of swinging the head vertically is made as illustrated in FIG. 11(a).

FIG. 11(b) illustrates a line-shaped indicator. The vertical line-shaped indicator is displayed to prompt the user to make the gesture of swinging the head vertically. As the angle of the head being vertically swung increases, the scale progresses in the downward direction. When the amount of change in the angle of the head being swung exceeds the operation threshold value, the scale reaches the maximum value and the operation is inputted.

FIG. 11(c) illustrates an indicator having a button shape. This type of indicator displays the scale by painting the background color inside the button. As the angle of the head being vertically swung increases, the inside of the button is gradually painted from top to bottom. When the amount of change in the angle of the head being swung exceeds the operation threshold value, the background color of the button is painted completely and the operation is inputted.

FIG. 11(d) illustrates an indicator that changes its shape. This type of indicator indicates the amount of change by extending the indicator itself in the vertical direction in proportion to the increase in the amount of change in the posture. As the angle of the head being vertically swung increases, the indicator itself extends vertically. When the amount of change in the angle of the head being swung exceeds the operation threshold value, the indicator extends to the maximum length. After that, the indicator returns to the original size and the operation is inputted.

FIG. 11(e) illustrates the case where an array of a plurality of indicators in small units constitutes an indicator and the scale thereof. This type of indicator indicates the amount of change by increasing the indicators being lit in the downward direction among the array of the indicators in proportion to the increase in the change in the posture. As the angle of the head being vertically swung increases, the number of indicators being lit increases. When the amount of change in the angle of the head being swung exceeds the operation threshold value, all of the indicators among the array of the indicators are lit and the operation is inputted.

FIGS. 12(a) to 12(e) are views for describing a correspondence relationship between the gesture of swinging the head horizontally and the shapes of indicators. FIGS. 12(b) to 12(e) illustrate the shapes of a plurality of types of indicators and the display modes of the amount of change in the posture when the gesture of swinging the head horizontally is made as illustrated in FIG. 12(a).

FIG. 12(b) illustrates a line-shaped indicator. The horizontal line-shaped indicator is displayed to prompt the user to make the gesture of swinging the head horizontally. As the angle of the head being horizontally swung increases, the scale progresses in the right direction. When the amount of change in the angle of the head being swung exceeds the operation threshold value, the scale reaches the maximum value and the operation is inputted.

FIG. 12(c) illustrates an indicator having a button shape. As the angle of the head being horizontally swung increases, the inside of the button is gradually painted from left to right. When the amount of change in the angle of the head being swung exceeds the operation threshold value, the background color of the button is painted completely and the operation is inputted.

FIG. 12(d) illustrates an indicator that changes its shape. As the angle of the head being horizontally swung increases, the indicator itself extends horizontally. When the amount of change in the angle of the head being swung exceeds the operation threshold value, the indicator extends to the maximum length. After that, the indicator returns to the original size and the operation is inputted.

FIG. 12(e) illustrates the case where an array of a plurality of indicators in small units constitutes an indicator and the scale thereof. As the angle of the head being horizontally swung increases, the number of indicators being lit increases in the horizontal direction. When the amount of change in the angle of the head being swung exceeds the operation threshold value, all of the indicators among the array of the indicators are lit and the operation is inputted.

FIGS. 13(a) to 13(e) are views for describing a correspondence relationship between the gesture of tilting the head and the shapes of indicators. FIGS. 13(b) to 13(e) illustrate the shapes of a plurality of types of indicators and the display modes of the amount of change in the posture when the gesture of tilting the head is made as illustrated in FIG. 13(a).

FIG. 13(b) illustrates a line-shaped indicator. The indicator having an arc shape is displayed to prompt the user to make the gesture of tilting the head. For the gesture of tilting the head to the left, an indicator having a left arc shape is displayed. For the gesture of tilting the head to the right, an indicator having a right arc shape is displayed. As the angle of the head being tilted increases, the scale progresses along the arc. When the amount of change in the angle of the head being tilted exceeds the operation threshold value, the scale reaches the maximum value and the operation is inputted.

FIG. 13(c) illustrates an indicator having a button shape. As the angle of the head being tilted increases, the inside of the button having an arc shape is gradually painted along the arc. When the amount of change in the angle of the head being swung exceeds the operation threshold value, the background color of the button is painted completely and the operation is inputted.

FIG. 13(d) illustrates an indicator that changes its shape. As the angle of the head being tilted increases, the indicator itself extends in an arc shape. When the amount of change in the angle of the head being tilted exceeds the operation threshold value, the indicator extends to the maximum and the operation is inputted.

FIG. 13(e) illustrates the case where an array of a plurality of indicators in small units constitutes an indicator and the scale thereof. As the angle of the head being tilted increases, the number of indicators being lit increases in an arc shape. When the amount of change in the angle of the head being tilted exceeds the operation threshold value, all of the indicators among the array of the indicators are lit and the operation is inputted.

As described above, according to the operation input method in the present embodiment, the user can easily input an operation by making a gesture such as moving the head in a state where the user wears the wearable display apparatus such as the head mounted display 100. Since there is no need to operate a controller, a keyboard, or the like, the user can maintain the focus on a video displayed in the head mounted display 100 and the feel of immersion is not disturbed. When the user makes a gesture to input an operation, the indicator is automatically displayed, allowing the user to intuitively recognize the direction in which to change the posture and how much to change the posture. Therefore, the user does not feel stress when inputting the operation. Further, since the operation input through the gesture is not accepted until the operation threshold value is exceeded, the operation can be canceled easily even when the gesture is made by mistake.

The present invention has been described based on the embodiment above. The embodiment is merely exemplary, and it should be understood by those skilled in the art that various modifications to the combination of each component and process thereof are possible and such modifications are also within the scope of the present invention. Such modifications will be described.

In the description above, changes in the posture through gestures such as swinging or tilting the head of the user wearing the head mounted display 100 have been given as examples. However, there may be other gestures besides these. When the movement of the user's body can be detected by a camera, a motion sensor, or the like, operations may be inputted using the change in the posture through gestures, e.g., waving a hand, raising a hand, holding a hand, stamping the feet, standing, and sitting.

### [Reference Signs List]

10 Control unit, 20 Input interface, 30 Output interface, 32 Backlight, 40 Communication control unit, 42 Network adapter, 44 Antenna, 50 Storage unit, 64 Posture sensor, 70 External input/output terminal interface, 72 External memory, 80 Clock unit, 100 Head mounted display, 110 Main body section, 120 Frontal region contacting section, 130 Temporal region contacting section, 200 Game machine, 700 Panoramic image generation device, 710 Zoom instruction acquisition unit, 720 Sensitivity adjustment unit, 730 Position and posture acquisition unit, 740 Coordinate conversion unit, 750 Panoramic image processing unit, 760 Panoramic image storage unit, 770 Image providing unit, 780 Indicator display unit, 790 Operation input unit.

### [Industrial Applicability]

The present invention can be used for an operation input technology in a wearable display.

## Claims

1. An operation input apparatus comprising:
a posture acquisition unit (730) adapted to acquire information on a posture of a user wearing a wearable display apparatus (100) ;
an operation input unit (790) adapted to accept an operation input through a gesture by the user; and
an indicator display unit (780) adapted to cause the wearable display apparatus (100) to display an indicator (520, 530, 540, 550) indicating an amount of change in the posture of the user at the time the gesture is made,
wherein the operation input unit (790) is further adapted to accept the operation input through the gesture when the amount of change in the posture exceeds an operation threshold value,
wherein the indicator display unit (780) is further adapted to display the operation threshold value in the indicator (520, 530, 540, 550),
**characterised in that** the operation input unit (790) is further adapted to adjust the operation threshold value according to the initial position of the posture at the time the user gesture is made and
the indicator display unit (780) is further adapted to adjust the sensitivity for displaying in the indicator (520, 530, 540, 550) the amount of change in the posture according to the initial position of the posture at the time the user gesture is made.

2. The operation input apparatus according to claim 1,
wherein the operation threshold value is set to a different value according to an attitude of the user at the time the gesture is made.

3. The operation input apparatus according to claim 1,
wherein the operation threshold value is set to a different value according to a width of a range of motion of the posture of the user at the time the gesture is made.

4. The operation input apparatus according to claim 1,
wherein the operation threshold value is set to a different value according to an initial position of the posture of the user at the time the gesture is made.

5. The operation input apparatus according to claim 1,
wherein the initial position of the posture of the user at the time the gesture is made is an initial tilt of a head of the user.

6. The operation input apparatus according to any of claims 1 to 5,
wherein the indicator display unit (780) displays a vertical indicator to prompt the user to perform a nodding movement.

7. The operation input apparatus according to any of claims 1 to 5,
wherein the indicator display unit (780) displays a horizontal indicator to prompt the user to perform a movement of swinging his head horizontally.

8. The operation input apparatus according to any of claims 1 to 5,
wherein the indicator display unit (780) displays an arc indicator to prompt the user to perform a movement of tilting his head.

9. An operation input method comprising:
a posture acquisition step of acquiring information on a posture of a user wearing a wearable display apparatus (100);
an operation input step of accepting an operation input through a gesture by the user; and
an indicator display step of causing the wearable display apparatus (100) to display an indicator (520, 530, 540, 550) indicating an amount of change in the posture of the user at the time the gesture is made,
wherein the operation input step further comprises accepting the operation input through the gesture when the amount of change in the posture exceeds an operation threshold value, wherein the indicator display step further comprises causing the wearable display apparatus (100) to display the operation threshold value in the indicator (520, 530, 540, 550),
**characterised in that** the operation input step further comprises adjusting the operation threshold value according to the initial position of the posture at the time the user gesture is made and the indicator display step further comprises adjusting the sensitivity for displaying in the indicator (520, 530, 540, 550) the amount of change in the posture according to the initial position of the posture at the time the user gesture is made.

10. A program causing a computer to implement:
a posture acquisition function that acquires information on a posture of a user wearing a wearable display apparatus (100);
an operation input function that accepts an operation input through a gesture by the user; and
an indicator display function that causes the wearable display apparatus to display an indicator (520, 530, 540, 550) indicating an amount of change in the posture of the user at the time the gesture is made,
wherein the operation input function further comprises accepting the operation input through the gesture when the amount of change in the posture exceeds an operation threshold value,
wherein the indicator display function further comprises causing the wearable display apparatus (100) to display the operation threshold value in the indicator (520, 530, 540, 550),
**characterised in that** the operation input function further comprises adjusting the operation threshold value according to the initial position of the posture at the time the user gesture is made and the indicator display function further comprises adjusting the sensitivity for displaying in the indicator (520, 530, 540, 550) the amount of change in the posture according to the initial position of the posture at the time the user gesture is made.

## Patentansprüche

1. Operationseingabevorrichtung, umfassend:
eine Körperhaltungserfassungseinheit (730), die dazu eingerichtet ist, Informationen über eine Körperhaltung eines Benutzers zu erfassen, der eine tragbare Anzeigevorrichtung (100) trägt;
eine Operationseingabeeinheit (790), die dazu eingerichtet ist, eine Operationseingabe durch eine Geste des Benutzers anzunehmen; und
eine Anzeigeranzeigeeinheit (780), die dazu eingerichtet ist, die tragbare Anzeigevorrichtung (100) dazu zu veranlassen, einen Anzeiger (520, 530, 540, 550) anzuzeigen, der einen Änderungsbetrag in der Körperhaltung des Benutzers zum Zeitpunkt der Geste anzeigt,
wobei die Operationseingabeeinheit (790) ferner dazu eingerichtet ist, die Operationseingabe durch die Geste anzunehmen, wenn der Änderungsbetrag in der Körperhaltung einen Operationsschwellenwert überschreitet,
wobei die Anzeigeranzeigeeinheit (780) ferner dazu eingerichtet ist, den Operationsschwellenwert im Anzeiger (520, 530, 540, 550) anzuzeigen,
**dadurch gekennzeichnet, dass**
die Operationseingabeeinheit (790) ferner dazu eingerichtet ist, den Operationsschwellenwert gemäß der Anfangsposition der Körperhaltung zum Zeitpunkt der Benutzergeste anzupassen, und die Anzeigeranzeigeeinheit (780) dazu eingerichtet ist, die weitere Empfindlichkeit zum Anzeigen des Änderungsbetrags in der Körperhaltung gemäß der Anfangsposition der Körperhaltung zum Zeitpunkt der Benutzergeste im Anzeiger (520, 530, 540, 550) anzupassen.

2. Operationseingabevorrichtung gemäß Anspruch 1,
wobei der Operationsschwellenwert gemäß einer Lage des Benutzers zum Zeitpunkt der Geste auf einen anderen Wert festgelegt wird.

3. Operationseingabevorrichtung gemäß Anspruch 1,
wobei der Operationsschwellenwert gemäß einer Breite eines Bewegungsbereichs der Körperhaltung des Benutzers zum Zeitpunkt der Geste auf einen anderen Wert festgelegt wird.

4. Operationseingabevorrichtung gemäß Anspruch 1,
wobei der Operationsschwellenwert gemäß einer Anfangsposition der Körperhaltung des Benutzers zum Zeitpunkt der Geste auf einen anderen Wert festgelegt wird.

5. Operationseingabevorrichtung gemäß Anspruch 1,
wobei die Anfangsposition der Körperhaltung des Benutzers zum Zeitpunkt der Geste eine anfängliche Neigung des Kopfes des Benutzers ist.

6. Operationseingabevorrichtung gemäß einem der Ansprüche 1 bis 5,
wobei die Anzeigeranzeigeeinheit (780) einen vertikalen Anzeiger anzeigt, um den Benutzer zum Durchführen einer Nickbewegung aufzufordern.

7. Operationseingabevorrichtung gemäß einem der Ansprüche 1 bis 5,
wobei die Anzeigeranzeigeeinheit (780) einen horizontalen Anzeiger anzeigt, um den Benutzer aufzufordern, eine horizontale Schwenkbewegung des Kopfes durchzuführen.

8. Operationseingabevorrichtung gemäß einem der Ansprüche 1 bis 5,
wobei die Anzeigeranzeigeeinheit (780) einen Bogenanzeiger anzeigt, um den Benutzer aufzufordern, eine Neigbewegung des Kopfes durchzuführen.

9. Operationseingabeverfahren, umfassend:
einen Körperhaltungserfassungsschritt zum Erfassen von Informationen über eine Körperhaltung eines Benutzers, der eine tragbare Anzeigevorrichtung (100) trägt;
einen Operationseingabeschritt zum Annehmen einer Operationseingabe durch eine Geste des Benutzers; und
einen Anzeigeranzeigeschritt zum Veranlassen der tragbaren Anzeigevorrichtung (100), einen Anzeiger (520, 530, 540, 550) anzuzeigen, der einen Änderungsbetrag in der Körperhaltung des Benutzers zum Zeitpunkt der Geste anzeigt,
wobei der Operationseingabeschritt ferner das Annehmen der Operationseingabe durch die Geste umfasst, wenn der Änderungsbetrag in der Körperhaltung einen Operationsschwellenwert überschreitet, wobei der Anzeigeranzeigeschritt ferner das Veranlassen der tragbaren Anzeigevorrichtung (100) umfasst, den Operationsschwellenwert im Anzeiger (520, 530, 540, 550) anzuzeigen,
**dadurch gekennzeichnet, dass**
der Operationseingabeschritt ferner das Anpassen des Operationsschwellenwertes gemäß der Anfangsposition der Körperhaltung zum Zeitpunkt der Benutzergeste umfasst und der Anzeigeranzeigeschritt ferner das Anpassen der Empfindlichkeit zum Anzeigen des Änderungsbetrags in der Körperhaltung im Anzeiger (520, 530, 540, 550) gemäß der Anfangsposition der Körperhaltung zum Zeitpunkt der Benutzergeste umfasst.

10. Programm, das ein Computersystem veranlasst, Folgendes zu implementieren:
eine Körperhaltungserfassungsfunktion, die Informationen über eine Körperhaltung eines Benutzers erfasst, der eine tragbare Anzeigevorrichtung (100) trägt;
eine Operationseingabefunktion, die eine Operationseingabe durch eine Geste des Benutzers annimmt; und
eine Anzeigeranzeigefunktion, die die tragbare Anzeigevorrichtung veranlasst, einen Anzeiger (520, 530, 540, 550) anzuzeigen, der einen Änderungsbetrag in der Körperhaltung des Benutzers zum Zeitpunkt der Geste anzeigt,
wobei die Operationseingabefunktion ferner das Annehmen der Operationseingabe durch die Geste umfasst, wenn der Änderungsbetrag in der Körperhaltung einen Operationsschwellenwert überschreitet,
wobei die Anzeigeranzeigefunktion ferner das Veranlassen der tragbaren Anzeigevorrichtung (100) umfasst, den Betriebsschwellenwert im Anzeiger (520, 530, 540, 550) anzuzeigen,
**dadurch gekennzeichnet, dass**
die Operationseingabefunktion ferner das Einstellen des Operationsschwellenwertes gemäß der Anfangsposition der Körperhaltung zum Zeitpunkt der Benutzergeste umfasst und die Anzeigeranzeigefunktion ferner das Anpassen der Empfindlichkeit zum Anzeigen des Änderungsbetrags in der Körperhaltung im Anzeiger (520, 530, 540, 550) gemäß der Anfangsposition der Körperhaltung zum Zeitpunkt der Benutzergeste umfasst.

## Revendications

1. Appareil d'entrée d'opération comprenant :
une unité d'acquisition de posture (730) conçue pour acquérir des informations sur une posture d'un utilisateur portant un appareil d'affichage portatif (100) ;
une unité d'entrée d'opération (790) conçue pour accepter une entrée d'opération via un geste de l'utilisateur ; et
une unité d'affichage d'indicateur (780) conçue pour amener l'appareil d'affichage portatif (100) à afficher un indicateur (520, 530, 540, 550) indiquant une quantité de changement dans la posture de l'utilisateur au moment où le geste est effectué,
dans lequel l'unité d'entrée d'opération (790) est en outre conçue pour accepter l'entrée d'opération via le geste lorsque la quantité de changement dans la posture dépasse une valeur seuil d'opération,
dans lequel l'unité d'affichage d'indicateur (780) est en outre conçue pour afficher la valeur seuil d'opération dans l'indicateur (520, 530, 540, 550),
**caractérisé en ce que**
l'unité d'entrée d'opération (790) est en outre conçue pour ajuster la valeur seuil d'opération en fonction de la position initiale de la posture au moment où le geste de l'utilisateur est effectué, et l'unité d'affichage d'indicateur (780) est en outre conçue pour ajuster la sensibilité pour afficher dans l'indicateur (520, 530, 540, 550) la quantité de changement dans la posture en fonction de la position initiale de la posture au moment où le geste de l'utilisateur est effectué.

2. Appareil d'entrée d'opération selon la revendication 1, dans lequel la valeur seuil d'opération est définie comme étant une valeur différente en fonction d'une attitude de l'utilisateur au moment où le geste est effectué.

3. Appareil d'entrée d'opération selon la revendication 1, dans lequel la valeur seuil d'opération est définie comme étant une valeur différente en fonction d'une largeur d'une plage de mouvement de la posture de l'utilisateur au moment où le geste est effectué.

4. Appareil d'entrée d'opération selon la revendication 1, dans lequel la valeur seuil d'opération est définie comme étant une valeur différente en fonction d'une position initiale de la posture de l'utilisateur au moment où le geste est effectué.

5. Appareil d'entrée d'opération selon la revendication 1, dans lequel la position initiale de la posture de l'utilisateur au moment où le geste est effectué, est un basculement initial de la tête de l'utilisateur.

6. Appareil d'entrée d'opération selon l'une quelconque des revendications 1 à 5, dans lequel l'unité d'affichage d'indicateur (780) affiche un indicateur vertical afin d'inviter l'utilisateur à effectuer un mouvement de flexion de la tête.

7. Appareil d'entrée d'opération selon l'une quelconque des revendications 1 à 5, dans lequel l'unité d'affichage d'indicateur (780) affiche un indicateur horizontal afin d'inviter l'utilisateur à effectuer un mouvement de rotation horizontale de la tête.

8. Appareil d'entrée d'opération selon l'une quelconque des revendications 1 à 5, dans lequel l'unité d'affichage d'indicateur (780) affiche un indicateur arqué afin d'inviter l'utilisateur à effectuer un mouvement de basculement de la tête.

9. Procédé d'entrée d'opération comprenant :
une étape d'acquisition de posture pour acquérir des informations sur une posture d'un utilisateur portant un appareil d'affichage portatif (100) ;
une étape d'entrée d'opération pour accepter une entrée d'opération via un geste de l'utilisateur ; et
une étape d'affichage d'indicateur pour que l'appareil d'affichage portatif (100) affiche un indicateur (520, 530, 540, 550) indiquant une quantité de changement dans la posture de l'utilisateur au moment où le geste est effectué,
dans lequel l'étape d'entrée d'opération consiste en outre à accepter l'entrée d'opération via le geste lorsque la quantité de changement dans la posture dépasse une valeur seuil d'opération, dans lequel l'étape d'affichage d'indicateur consiste en outre à amener l'appareil d'affichage portatif (100) à afficher la valeur seuil d'opération dans l'indicateur (520, 530, 540, 550),
**caractérisé en ce que**
l'étape d'entrée d'opération consiste en outre à ajuster la valeur seuil d'opération en fonction de la position initiale de la posture au moment où le geste de l'utilisateur est effectué, et l'étape d'affichage d'indicateur consiste en outre à ajuster la sensibilité pour afficher dans l'indicateur (520, 530, 540, 550) la quantité de changement dans la posture en fonction de la position initiale de la posture au moment où le geste de l'utilisateur est effectué.

10. Programme faisant qu'un ordinateur va exécuter :
une fonction d'acquisition de posture pour acquérir des informations sur une posture d'un utilisateur portant un appareil d'affichage portatif (100) ;
une fonction d'entrée d'opération pour accepter une entrée d'opération via un geste de l'utilisateur ; et
une fonction d'affichage d'indicateur pour amener l'appareil d'affichage portatif à afficher un indicateur (520, 530, 540, 550) indiquant une quantité de changement dans la posture de l'utilisateur au moment où le geste est effectué,
dans lequel la fonction d'entrée d'opération consiste en outre à accepter l'entrée d'opération via le geste lorsque la quantité de changement dans la posture dépasse une valeur seuil d'opération,
dans lequel la fonction d'affichage d'indicateur consiste en outre à amener l'appareil d'affichage portatif (100) à afficher la valeur seuil d'opération dans l'indicateur (520, 530, 540, 550),
**caractérisé en ce que**
la fonction d'entrée d'opération consiste en outre à ajuster la valeur seuil d'opération en fonction de la position initiale de la posture au moment où le geste de l'utilisateur est effectué, et la fonction d'affichage d'indicateur consiste en outre à ajuster la sensibilité pour afficher dans l'indicateur (520, 530, 540, 550) la quantité de changement dans la posture en fonction de la position initiale de la posture au moment où le geste de l'utilisateur est effectué.
